# EUROPEAN PATENT SPECIFICATION

(11) **EP 0 383 044 B1**
(45) Date of publication and mention of the grant of the patent: **09.06.1993**
(21) Application number: 90101083.5
(22) Date of filing: 19.01.1990
(51) Int. Cl.: H01M 4/76

(54) **Multitubular sheaths with reinforced structure for lead-acid battery electrodes**
Mehrrohrige Folien mit verstärkter Struktur für Bleisäure-Batterieelektroden
Feuilles multitubulaires à structure renforcée pour électrodes de batteries plomb-acide

(30) Priority: 27.01.1989 IT 1921389
(43) Date of publication of application: 22.08.1990
(73) Proprietor: TERMAR S.r.l., I-20135 Milano (IT)
(72) Inventor: Terzaghi, Giovanni, I-20135 Milano (IT)
(74) Representative: Lecce, Giovanni

(56) References cited:
- EP-A- 0 218 777
- DE-A- 2 820 501
- FR-A- 1 248 936
- FR-A- 1 335 484
- GB-A- 603 506
- GB-A- 821 577

## Description

The present invention refers to porous supports with reinforced structure for lead-acid batteries and more specifically to multitubular sheaths for lead-acid battery electrodes, particularly suitable for filling systems with active material in liquid, slurry or creamy paste form.

For many years the so-called tubular plates, better known as iron-clad plates, have been successfully used as positive electrodes in industrial lead-acid batteries of the stationary type and the type for traction.

These plates are described in literature; in particular, we refer to U.S.A. patent No. 4.048.399 and U.K. patent No. 1.599.084 and the article "Technology of lead-acid batteries" - "Chemical technologies" No. 4-1-1981, all in the name of the same Inventor. Multitubular sheaths for the retention of active material in the electrodes of lead-acid batteries having the features as defined in the preamble of claim 1 are known from EP-A-0218777 and DE-A-2820501.

As is well-known,the working life of lead-acid batteries strictly depends on the detachment of the active material from the plates, both positive and negative, and on the corrosion of the conductive in lead alloy or grid support, in particular that of the positive plate. Both effects are caused by mechanical stress due to the volume variation of the active material during charging and discharging, by the overloading of the elements and also by the vibrations to which the batteries may be subject.

To prevent rapid deterioration of the batteries an attempt was made to limit the above problems by using special supporting structures, for example precisely multitubular fabric sheaths, in particular for the tubular positive plates of industrial batteries.

The multitubular fabric sheaths consist of a series of small tubes obtained by weaving together synthetic, porous acid-resistant yarns, with an outside diameter of about 9 mm, interconnected and arranged parallelly side by side. The small tubes are then filled with lead oxide after the insertion of a central lead alloy grid, resistant to corrosion.

It is also well-known that the capacity of the plate depends not only on the quantity of active material but also on the accessibility to said active material of the necessary quantity of acid and on the access speed required by the discharge process.

It is however evident that, to obtain a tubular plate of good quality and long working life, the following problems must be solved:
- to support the active material and guarantee reciprocal cohesion of its crystals or grains, as also their consequent adhesion to the conductive supporting grid;
- to preserve the abovementioned cohesion and adhesion, at the same time guaranteeing a high, constant porosity, to permit the electrolyte to flow totally and rapidly;
- to guarantee the necessary elasticity of the porous support and its constancy over a period of time as the mixture is subject to volume variations due to the transformation from PbO₂ to PbSO₄;
- to obtain a good constant mechanical strength over a period of time;
- to obtain a high resistance to electrochemical oxidization;
- to obtain a low electrical resistance of the porous support;
- to obtain a minimum contamination of the electrolyte caused by the products of the breakage of the polymeric molecules of the support, in particular with regard to the chlorine and perchlorine ions; and
- to obtain a high constant capacity during the working life of the battery (measured in number of charging and discharging cycles).

All these characteristics can be obtained using a good tubular supporting grid in lead alloy and a good multitubular sheath, optimally filling the sheath with the mixture of lead oxides which forms the active material of the positive electrode of the lead-acid battery.

The most important process in the industrial manufacturing cycle of a tubular plate is the filling of the small tubes of the sheath.

There are basically two systems: the first uses lead dust, the second pastes or a liquid means in which the lead oxides are suspended. The two systems are respectively most commonly called dry filling and humid filling. In the dry filling system the powder, fed from the top, progressively fills, by means of a beater or vibrator, the single small tubes of the multitubular sheath, placed in vertical position, until the desired powder density inside the tubes is obtained.

Various systems exist on the market: some very simple, composed of a box in which a certain number of multitubular sheaths are placed. The lead dust is fed from the top, while the box vibrates vigorously until all the sheaths are filled.

Other systems are automatic, almost continuous, and exploit rotating tables or chain system which convey the sheaths from the feed position, in which the empty multitubular sheaths are fed, up to the arrival point of the multitubular plate filled with lead oxide.

As mentioned above, there are basically two humid systems: one uses a real paste with viscosity comparable to that of a toothpaste, and the other a liquid solution which keeps the particles of lead oxide suspended. In the first system, the active material in paste form is extruded into the small tubes of the multitubular sheath by a machine which, slowly retracting, simultaneously fills the space inside each single tube with the active material.

The paste, in this case, has a high viscosity and density and needs a rather compact fabric structure to be held inside the tube. Furthermore, extrusion takes place by pressure and the multitubular sheath must therefore be able to withstand adequately this pressure without suffering permanent deformation. It must also be able to hold the paste elastically and strongly pressed against the spine of the conductive lead grid.

In the other filling system, which uses instead a dispersion of lead oxides in water, the multitubular sheath is filled in a very short time, about one second, by a nozzle composed of as many holes, as there are small tubes in the multitubular sheath, and from which the liquid containing the suspended lead oxides flows out under pressure. The liquid then flows out of the mesh and pores of the sheath, while the oxides are held inside said sheath. In this second case, pressure is not high and the filling speed is considerable. Also in this case the sheath must be able to provide a very rapid outflow of water but must be able to retain the suspended lead oxides to prevent the oxide particles flowing out with the water.

Both systems, dry and humid, present advantages and disadvantages.

According to the present invention, this and other objects, which will be seen from the following description, are obtained by means of a multitubular sheath with reinforced structure for lead-acid battery electrodes consisting of two separate layers of an identical fabric which are crossed at regular intervals to form a series of small regular tubes, in which the fabric is formed, in transversal direction, by continuous, high tenacity, elastic, multi-filament, yarn, twisted with at least 200 turns per metre, and, in vertical direction parallel to the axis of each tube, in weft, alternately by an elastic, high tenacity multifilament yarn, twisted with at least 200 turns per metre, and by a continuous voluminized stable yarn.

The fabric is produced on a loom in two separate layers which, during production, are crossed at equal and regular intervals to form a tubular fabric, which is impregnated with solutions having a synthetic resin base, dried and thermoformed.

However, there has recently been a large development of industrial wet type filling systems, which permit a better control of pollution caused by lead dust: this system, in fact, does not create dust pollution in the air, but holds all the dust in the liquid phase, so that, acting only on the water used, which is recycled and adequately filtered, gaseous pollution is completely prevented.

One of the aims of the present invention is to obtain a multitubular sheath for lead-acid batteries from a woven tubular sheath with reinforced structure and with high porosity and filtering capacity, particularly suitable for humid filling of small tubes.

The main problem of multitubular sheaths is to optimize the compactness of the fabrics and therefore the value of their electrical resistance with the capacity of said fabric to hold the active material contained in it.

When dry filling systems are used, an optimal sheath must be highly rigid and its surface as smooth as possible, to permit the rapid flow of the powder inside the tube, and it must prevent this dust escaping through the pores of the fabric.

When humid filling is used, on the contrary, the multitubular sheath must act as filter, i.e. it must hold the oxide suspensions inside it and possibly allow only the water and/or the solution conveying the lead oxides to pass.

There are various types of multitubular sheaths on the market, for example constructed with mixed polyester-polypropylene or modacrylic fibres. These materials are normally not treated with resins and are semirigid and self-supporting as they harden by simple thermal effect, in the first case due to melting of the polypropylene, which binds the polyester fibres together, and in the second case as the fibre is thermoretractable. The multitubular sheaths thus obtained are composed of yarns manufactured with short staple synthetic fibre. These sheaths therefore have a high porosity and a pore size suitable to hold, in particular, pastes and liquids, i.e. suitable for humid filling. These sheaths are also used for dry filling, but, in this case, due to the low rigidity, they are more difficult to fill and tend to retain dust on the outside during filling. Furthermore, said sheaths have a low elasticity, and while presenting sufficient oxidation resistance they may, due to temperature and electrochemical oxidation, release considerable quantities of chlorine or derivatives of same in the electrolyte, with serious consequences for the life of the battery.

The sheaths constructed with mixed polypropylene-polyester yarns, besides the difficulty of dry filling, offer a lower oxidation resistance.

Multitubular sheaths also exist constructed with polyester yarns of various natures and types, e.g. high tenacity multifilament polyester yarns and polyester staple yarns, normally covered with synthetic resins with acrylic base to increase rigidity and oxidation resistance. However, if excessively applied to protect the short fibre polyester yarns from oxidation, these resins, being thermoplastic, may present some problems due to temperature increases inside the battery.

Multitubular sheaths in polyester felt also exist (Itatalian patent No. 666.203, U.K. Patent No. 1.551.798) obtained from two layers of thin polyester felt stitched together in adjacent parallel lines, at equal regular intervals; said layers are then sprayed with resins to maintain the shape given to them during production of the multitubular sheath. Polyester felts naturally have a high porosity, but have a rather low mechanical characteristic and a total absence of elasticity; furthermore, during battery charging and discharging cycles, there are variations in the diameter of the sheath tubes causing permanent local deformation.

This naturally means a loss of the compression of the active material round the spine and therefore the loss of conductivity and a rise in the inside resistance of the active mass. It is also well-known that these sheaths do not have thermal stability and are therefore unsuitable for use in batteries operating in particularly strenuous conditions (U.K.Patent N.1,574,722). They are optimal for filling with liquids and are also suitable for filling with pastes.

The object of the present invention is to construct a multitubular sheath which fulfils all the previously illustrated requisites and which has, besides exceptional resistance to electrochemical oxidation, good mechanical and elastic characteristics and a high filtering and retaining capacity of the active material, to be used in humid filling systems.

The term polyester, as used in the present description and the claims, refer primarily and preferably to terephthalate polyethylene, even if other polyesters, like polybutylene-terephthalate can be used.

The torsion of the continuous, multifilament polyester thread is between 200 and 600 turns per metre.

The continuous multifilament polyester yarns are today available on the market in both high tenacity and normal type. These yarns consist of a certain number of continuous filaments, all equal, generally of about 5 Dtex count, which together form the continuous yarn. When the filaments are suitably twisted, the yarn obtained possesses compactness and a degree of elasticity which depends on the characteristics of said filaments and the twist applied, as claimed in the Italian Patent Application No. 19127A/88 by this Applicant.

Instead of being twisted, the multifilament yarn may be textured or voluminized, using compressed air or various techniques. The single filaments are thus moved apart in order to obtain a greater volume of the yarn. With this volume technique, the single yarn filaments are also interconnected.

According to the present invention, these textured or voluminized yarns can then be treated at high speed in such a way that the most external filaments are stapled, i.e. cut and twisted round themselves, to give the thread a predetermined hairiness. According to the working speed, approximately 80% of the filaments preserve their original form and length, i.e. practically infinite compared with the dimensions of the fabrics; the remaining filaments, especially the most external ones, are broken and can be arranged freely along the yarn, to give it a further partial-ramification.

The yarns thus obtained, suitably voluminized and stapled, therefore have all the characteristics of the original multifilament yarns; in particular, starting from high tenacity yarns, they will have the characteristics of a high tenacity yarn, and therefore have tensile breakage loads of a minimum of 50 cN/Dtex.

Suitably combining continuous, high tenacity multifilament yarns, twisted with high torsion, and high tenacity voluminized and stapled yarns, a fabric is obtained with extremely high mechanical characteristics, high longitudinal and transversal elasticity, and at the same time a high degree of porosity determined by the voluminized yarn. Consequently the porosity of the fabric is due not only to its mesh (macroporosity), i.e. at the free spaces obtained between adjacent yarns, but also to the porosity inside the voluminized and stapled yarn itself (microporosity).

The fabric thus obtained can be further protected from oxidation and made rigid by the use of conventional synthetic resins or sprays, phenolic or acrylic based. Other protections with synthetic resins particularly resistant to acid and and oxidation are also possible. The resin impregnation also allows to mechanically fix the vacuum spaces inside the voluminized yarn and preserve the microporosity of same. As an unbinding example, the following is a description of a constructive process of a multitubular sheath with the above characteristics.

A square, cloth-type, double tubular fabric is produced in warp with continuous, high tenacity polyester multifilament yarns, of thermoretractable type, with a count of 600 Dtex and 200 turns per metre. For the weft, a continuous, high tenacity multifilament yarn, of thermostabilized type, i.e. not thermoretractable, with a count of 600 Dtex and 250 turns per metre, and a high tenacity, multifilament, voluminized and staple yarn, with a count of 500 Dtex with double left twist of 150 turns per metre, are alternately used.

The fabric is produced on a conventional loom, in two separate equal layers, which are crossed at regular predetermined intervals, so that the fabric initially on the top becomes the lower side in the following interval and viceversa.

Each of these interval parts becomes a small tube of the tubular fabric. The fabric is then impregnated with a 30% phenoloformaldehyde base solution, to which a catalyzer is added to accelerate the polymerization reaction of the phenolic resin. The fabric, oven-dried, is then thermoformed at temperature between 100°C and 250°C, through the insertion, in each of the same tubes, of a metal spindle of desired shape, for example, with circular section with 8.0 mm diameter. Through thermoforming at a temperature of approximately 200°C for 15 minutes, a semirigid, self-supporting, porous multitubular fabric is obtained. When the metal spindles are extracted, the fabric may be cut to size, to obtain a multitubular sheath of the required dimensions.

Multitubular sheaths can however be produced using a fabric obtained as described above as per the indications of Italian Patent N. 2,251,085 and European Patent Application N. 0218777 both by the same Applicant and Inventor. Into the sheath thus obtained, a tubular lead alloy grid basically composed of a crossbar and a series of round spines, placed perpendicularly to the bar, each with a diameter of approximately 3 mm, and a length roughly equivalent to that of the multitubular sheath is then inserted.

Each of these spines is equipped with spacing fins, so that, once each is inserted into a sheath tube, said spine is positioned in the centre of the tube. The sheath is then placed in vertical position, with the lead bar on the bottom and the upper part open and already containing the conductive spines. A solution is then injected from the top, containing the mixture of lead oxides which form the active material of the positive plate. The liquid violently enters the inside of the sheath which expands flexibly thanks to the transversal high tenacity multifilament yarns with a high twist ratio, and holds the lead oxides inside it, due particularly to the voluminized and stapled yarns. The water flows out through the pores of the fabric and the lead oxides are held inside the sheath.

At this point sealing is carried out by means of suitable plastic bars: the tubular plate is now ready for the subsequent forming and seasoning operations.

This present invention covers the use of voluminized yarns with other systems, e.g. twisting together voluminized fibres with short fibres or partially voluminizing continuous, high tenacity, multifilament yarns of the fabric already produced. In this latter alternative, a rather loosely-woven fabric is obtained, composed in warp of continuous, high tenacity, multifilament yarns, highly twisted and thermoretractable and, in weft, of parallel yarns obtained from thermostabilized multifilament yarns, high tenacity, twisted with at least 200 turns per metre, and the second composed of synthetic fibre, e.g. polyester, of English count Ne 12/1 or Ne 24/2, formed by staple fibre with a strength at least equal to 55 CN/Tex and a filament count below 8 Dtex, preferably 2 Dtex, and with a total twist varying between 200 and 600 turns per metre, preferably 400. The fibre length varying between 30 and 150 mm.

The use of a combined system of compressed air and jets of high temperature hot air, e.g. over 80°C and up to 200°C, disarranges the yarn. High temperature air causes retraction of the thermoretractable yarns, producing a fabric voluminized by crimping the transversal warp yarns and a part of the weft yarns, these latter being alternately thermoretractable and thermostabilized. The retraction of all the thermoretractable yarns causes crimping of the stabilized yarns.

The fabric thus obtained can be used to construct multitubular sheaths according to the present invention.

The sheath, object of this invention, can be used according to the methods described using yarns of polypropylene, acrylic or other synthetics including mixtures of polypropylene, polyester, glass-polyester, glass-polypropylene, etc.

These yarns are obtained from yarns or fibres already previously voluminized and twisted to form yarns which maintain the desired voluminosity and porosity.

The object of the present invention is therefore a multitubular sheath or a portion of same, formed, in transversal direction or warp, by continuous, high tenacity, elastic yarns, with a high number of turns per metre and in vertical direction, or weft, i.e. parallel to the axis of the single tubes, alternately, by a continuous, elastic, high tenacity twisted yarn, and by a high tenacity, voluminized and stapled yarn.

In the case of sheaths with unflexible yarns of fibres, the presence of humps, bulges and deformations may be noted in various points of the sheath. After some years' use, i.e. after a certain number of charging and discharging cycles it is obvious that porosity therefore changes in these points, due to the widening of the fabric mesh and the shedding of the active material, which may come out of the tube.

According to the present invention, however, the elastic tension of the yarns withstands local deformation, limiting it.

The sheath of the present invention therefore guarantees improved operation of the positive electrode when its performance starts deteriorating due to other phenomena such as the disintegration of the active material and corrosion of the spines.

The sheath therefore has a high traction strength in vertical direction, due to the presence of the continuous, high tenacity, multifilament, twisted elastic yarns, and has a perfectly elastic elongation in the field of small deformations up to 3% of elongation, which is the deformation which may generally take place during the life of the battery due to the elongation and corrosion of the conductive lead alloy spine.

The sheath has in this case an effect of elastic hold of the active material against the spine: the elongation of the continuous, twisted, multifilament, vertical yarns causes, in fact, a stress charge which even further guarantees compression of the active material contained in the tube.

The sheath object of the present invention also allies the above characteristics of high resistance and elasticity with a high porosity and retaining capacity of the active material.

## Claims

1. Multitubular sheath with reinforced structure for lead-acid battery electrodes, particularly suitable for filling with active material in liquid or paste form, with high retaining capacity of the active material and high filtering capacity, consisting of two separate identical layers of fabric which are crossed at regular intervals to form a series of identical, adjacent tubes to contain the active material, characterized in that the fabric forming said layers is formed, in transversal direction, by continuous, high tenacity, elastic, multifilament yarns twisted with at least 200 turns per metre and, in vertical direction parallel to the axis of each tube, alternately by an elastic high tenacity multifilament yarn twisted with at least 200 turns per metre and by a continuous voluminized staple yarn.

2. Multitubular sheath with reinforced structure for lead-acid battery electrodes, according to claim 1, in which the yarn twist is between 200 and 600 per metre.

3. Multitubular sheath with reinforced structure for lead-acid battery electrodes, according to claim 1 or 2, characterized by the fact that the high tenacity yarn, twisted and/or voluminized and stapled, is a continuous multifilament yarn.

4. Multitubular sheath with reinforced structure for lead-acid battery electrodes, as per any of the previous claims, in which at least 80% of the filaments of the twisted and/or voluminized and stapled yarn maintain their original lengths, the remainder being broken and placed freely along the yarn.

5. Multitubular sheath with reinforced structure for lead-acid battery electrodes, according to claim 1 or 2, in which the high tenacity twisted and/or textured/voluminized and stapled yarn is a yarn of synthetic fibre with a total twist between 200 and 600 turns per metre, and composed of fibre with a strength at least equal to 55 cN/tex and a filament count below 8 Dtex.

6. Multitubular sheath with reinforced structure for lead-acid battery electrodes, as per any of the previous claims, characterized by the fact that the continuous elastic yarns have a strength of at least 50 cN/Dtex.

7. Multitubular sheath with reinforced structure for lead-acid battery electrodes as per any of the previous claims in which the continuous multifilament yarns are made of polyethylene terephthalate.

8. Multitubular sheath with reinforced structure for lead-acid battery electrodes, as per any of the previous claims, characterized by the fact that the textured or voluminized, stapled or twisted yarn is formed by short fibres of polyethylene, polypropylene, acrylic, modacrylic, glass and polyester and/or combinations of said fibres.

9. Multitubular sheath reinforced for lead-acid battery electrodes, as per any of the previous claims, impregnated with a phenolic or acrylic resin and thermoformed at temperature between 100 and 250°C.

10. Tubular plates with reinforced structure for lead-acid battery electrodes, composed of multitubular sheaths, as per any of the previous claims, filled with active material in liquid, slurry or creamy paste form.

## Patentansprüche

1. Mehrrohrige Folie mit verstärkter Struktur für Bleisäure-Batterieelektroden, insbesondere zum Füllen mit aktivem Material in flüssiger Form oder in Pastenform, mit hoher Haltekapazität für das aktive Material und hoher Filterkapazität, bestehend aus zwei getrennten identischen Schichten eines Gewebes, die in regelmäßigen Abständen gekreuzt werden, um eine Reihe von identischen, angrenzenden Rohren zu bilden, die das aktive Material aufnehmen,
dadurch gekennzeichnet,
daß das diese Schichten bildende Gewebe in Querrichtung durch kontinuierliche, hochfeste, elastische Multifilamentgarne, die wenigstens 200 Drehungen pro Meter gedreht sind, und in vertikaler Richtung parallel zu der Achse jedes Rohres abwechselnd durch ein elastisches, hochfestes Multifilamentgarn, gedreht bzw. gezwirnt mit wenigstens 200 Drehungen pro Meter, und durch ein kontinuierliches, voluminöses Stapelgarn gebildet ist.

2. Mehrrohrige Folie mit verstärkter Struktur für Bleisäure-Batterieelektroden nach Anspruch 1, bei dem die Garndrehung zwischen 200 und 600 pro Meter liegt.

3. Mehrrohrige Folie mit verstärkter Struktur für Bleisäure-Batterieelektroden nach Anspruch 1 oder 2,
dadurch gekennzeichnet,
daß das hochfeste Garn, gedreht bzw. gezwirnt und/oder voluminös bzw. im Volumen vergrößert und gestapelt, ein kontinuierliches Multifilamentgarn ist.

4. Mehrrohrige Folie mit verstärkter Struktur für Bleisäure-Batterieelektroden nach einem der vorhergehenden Ansprüche, wobei wenigstens 80 % der Filamente des gedrehten und/oder voluminösen und gestapelten Garns ihre ursprüngliche Länge beibehalten, während der Rest gebrochen und frei längs des Garns angeordnet ist.

5. Mehrrohrige Folie mit verstärkter Struktur für Bleisäure-Batterieelektroden nach Anspruch 1 oder 2, wobei das hochfeste, gedrehte und/oder texturierte/voluminöse und gestapelte Garn ein Garn aus synthetischer Faser mit einer Gesamtdrehung zwischen 200 und 600 Drehungen pro Meter ist und das Garn aus Fasern mit einer Festigkeit von wenigstens gleich 55 cN/tex und einer Filamentzahl unter 8 Dtex zusammengesetzt ist.

6. Mehrrohrige Folie mit verstärkter Struktur für Bleisäure-Batterieelektroden nach einem der vorhergehenden Ansprüche,
dadurch gekennzeichnet,
daß die kontinuierlichen elastischen Garne eine Festigkeit von wenigstens 50 cN/Dtex haben.

7. Mehrrohrige Folie mit verstärkter Struktur für Bleisäure-Batterieelektroden nach einem der vorhergehenden Ansprüche, wobei die kontinuierlichen Multifilament-Garne aus Polyäthylen Terephthalat bestehen.

8. Mehrrohrige Folie mit verstärkter Struktur für Bleisäure-Batterieelektroden nach einem der vorhergehenden Ansprüche,
dadurch gekennzeichnet,
daß das texturierte oder voluminöse, gestapelte oder gedrehte Garn aus kurzen Fasern aus Polyäthylen, Polypropylen, Acryl, Modacryl, Glas und Polyester und/oder Kombinationen von dieses Fasern gebildet ist.

9. Mehrrohrige Folie, verstärkt für Bleisäure-Batterieelektroden, nach einem der vorhergehenden Ansprüche, wobei sie mit einem Phenol- oder Acrylharz imprägniert und bei einer Temperatur zwischen 100 und 250 °C warmgeformt ist.

10. Rohrförmige Platten mit verstärkter Struktur für Bleisäure-Batterieelektroden, zusammengesetzt aus mehrrohrigen Folien nach einem der vorhergehenden Ansprüche, gefüllt mit aktivem Material in der Form einer Flüssigkeit, einer Aufschlämmung oder einer cremigen Paste.

## Revendications

1. Feuille multitubulaire à structure renforcée pour des électrodes de batteries du type plomb-acide, convenant plus particulièrement pour un remplissage avec une matière active sous forme liquide ou pâteuse, ayant une capacité élevée de retenue de la matière active et une capacité de filtrage élevée, constituée de deux couches de tissu identiques, séparées, qui sont entrecroisées, à des intervalles réguliers, afin de former une série de tubes adjacents identiques destinés à contenir la matière active, caractérisée en ce que le tissu formant les couches est constitué, dans la direction transversale, par des fils élastiques continus, à filaments multiples, à ténacité élevée, ayant subi une torsion d'au moins 200 tours au mètre et, dans la direction verticale parallèle à l'axe de chaque tube, alternativement par un fil élastique à filaments multiples, à ténacité élevée, ayant subi une torsion d'au moins 200 tours au mètre et par un fil continu gonflé, en fibre coupée.

2. Feuille multitubulaire à structure renforcée pour des électrodes de batteries du type plomb-acide suivant la revendication 1 caractérisée en ce que la torsion du fil est comprise entre 200 et 600 tours au mètre.

3. Feuille multitubulaire à structure renforcée pour des électrodes de batteries du type plomb-acide suivant la revendication 1 ou 2 caractérisée en ce que le fil à ténacité élevée, tordu et/ou gonflé et à fibre coupée, est un fil continu à filaments multiples.

4. Feuille multitubulaire à structure renforcée pour des électrodes de batteries du type plomb-acide suivant l'une quelconque des revendications précédentes caractérisée en ce qu'au moins 80% des filaments du fil tordu et/ou gonflé et à fibre coupée conservent leurs longueurs originales, le reste des filaments étant rompus et placés librement le long du fil.

5. Feuille multitubulaire à structure renforcée pour des électrodes de batteries du type plomb-acide suivant la revendication 1 ou 2 caractérisée en ce que le fil à ténacité élevée, tordu et/ou texturé/gonflé et à fibre coupée, est un fil d'une fibre synthétique ayant subi une torsion totale comprise entre 200 et 600 tours au mètre, et composée d'une fibre ayant une résistance au moins égale à 55cN/tex et un compte de filament inférieur à 8Dtex.

6. Feuille multitubulaire à structure renforcée pour des électrodes de batteries du type plomb-acide suivant l'une quelconque des revendications précédentes caractérisée en ce que les fils élastiques continus ont une résistance d'au moins 50cN/Dtex.

7. Feuille multitubulaire à structure renforcée pour des électrodes de batteries du type plomb-acide suivant l'une quelconque des revendications précédentes caractérisée en ce que les fils continus à filaments multiples sont réalisés en téréphthalate de polyéthylène.

8. Feuille multitubulaire à structure renforcée pour des électrodes de batteries du type plomb-acide suivant l'une quelconque des revendications précédentes caractérisée en ce que le fil texturé ou gonflé, à fibre coupée ou tordu, est formé par des courtes fibres de polyéthylène, de polypropylène, de résine acrylique, de résine modacrylique, de verre et polyester et/ou des combinaisons de ces fibres.

9. Feuille multitubulaire à structure renforcée pour des électrodes de batteries du type plomb-acide suivant l'une quelconque des revendications précédentes caractérisée en ce qu'elle est imprégnée d'une résine phénolique ou acrylique et thermoformée à une température comprise entre 100 et 250°C.

10. Plaques tubulaires à structure renforcée pour des électrodes de batterie du type plomb-acide, composées de feuilles multitubulaires suivant l'une quelconque des revendications précédentes, remplies d'une matière active sous la forme d'un liquide, d'une bouillie ou d'une pâte crémeuse.
